# FASCICULE DE BREVET EUROPEEN

(11) **EP 0 743 405 B1**
(45) Date de publication et mention de la délivrance du brevet: **27.06.2001**
(21) Numéro de dépôt: 96401023.5
(22) Date de dépôt: 10.05.1996
(51) Int. Cl.: E04F 15/12, C04B 26/02

(54) **Revêtement de sol comportant des motifs disposés de façon prédétérminée, insérés sans joint dans une résine souple**
Bodenbelag mit in einer bestimmten Form angeordnetem Muster, nahtlos eingebettet in weichem Harz
Floor covering comprising in a predetermined manner arranged patterns, seamlessly inserted in soft resin

(30) Priorité: 11.05.1995 FR 9505569
(43) Date de publication de la demande: 20.11.1996
(73) Titulaire: ETABLISSEMENTS BOULENGER, F-75018 Paris (FR)
(72) Inventeur: Berlemont, Jacques, 95270 Viarmes (FR); Poupon, Xavier, 75020 Paris (FR)
(74) Mandataire: Lhuillier, René

(56) Documents cités:
- EP-A- 0 086 626
- CH-A- 476 190
- DE-A- 1 509 879
- DE-A- 1 659 362
- DE-A- 2 151 174
- DE-U- 29 500 612
- FR-A- 2 627 518
- GB-A- 989 791
- GB-A- 1 213 592

## Description

L'invention concerne les revêtements de sol de finition ou de base, comprenant une résine souple.

Les revêtements de finition de ce type tels que le GRANITO sont habituellement constitués d'une résine souple dans laquelle sont répartis, de façon totalement aléatoire, des grains, par exemple de caoutchouc. Dans ces conditions, les variations de l'aspect général des revêtements sont limitées et il n'est pas possible d'obtenir un décor prédéterminé.

De leur côté, les dallages classiques qui comportent des joints présentent des inconvénients en raison de la fragilité des joints qui se détériorent au cours du temps, notamment lors des nettoyages et laissent l'eau ou d'autres liquides s'infiltrer sous les dalles.

Par ailleurs, les voitures de transports en commun, notamment de métro, dont le sol est réalisé à partir d'un revêtement en caoutchouc (dalles ou tapis) collé sur un plancher de bois (contre-plaqué marine), présentent des problèmes de corrosion au niveau des caisses porteuses, lesquels sont dus à la non-étanchéité du support en bois du revêtement.

Ces problèmes de corrosion se traduisent par une attaque de la caisse de la voiture mais aussi par un pourrissement du plancher en bois (contre-plaqué marine).

La solution technique actuellement utilisée consiste à enlever le plancher en bois, à traiter la caisse corrodée et à réaliser un revêtement à base de résine et de granulés de caoutchouc. Toutefois, étant donné l'épaisseur du plancher en bois (de l'ordre de 22 mm) et du revêtement en caoutchouc (environ 5 mm), l'épaisseur totale à traiter (d'environ 27 mm) est très importante et le coût élevé.

L'invention a donc pour but de remédier aux inconvénients de l'art antérieur cités ci-dessus.

Selon l'un de ses aspects, l'invention a pour objet un revêtement de sol formé in situ tel que défini à la reventication 1.

Selon un mode avantageux de réalisation, le revêtement de sol selon l'invention est caractérisé en ce qu'il est un revêtement de finition décoratif, laissant apparaître les motifs qu'il comporte.

La couche d'accrochage est constituée par exemple d'une résine bi-composant polyhydroxylée chargée et d'un polyisocyanate de type MDI (4,4'-diisocyanate de diphénylméthane), d'un polyuréthane mono-composant, d'un époxy ou d'un méthacrylate.

Les motifs, identiques ou différents quant à leur(s) couleur(s), leur forme et la matière qui les constitue, peuvent être figuratifs, c'est-à-dire avoir des formes géométriques ou représenter par exemple des chiffres, des lettres, des personnages, des animaux, des symboles, des sigles etc... Ces motifs peuvent également avoir des formes quelconques, notamment lorsque l'on réalise un revêtement de base.

Ils sont constitués d'une matière compatible avec l'usage envisagé et avec la résine souple utilisée. En tant que matières de ce type on peut citer notamment le caoutchouc, les matières plastiques, les résines époxy, le polyméthacrylate et le bois.

Les motifs ont avantageusement une épaisseur de 4 à 20 mm et une surface de 0,5 cm² à 2 m², selon l'application envisagée.

La nature de la résine souple dans laquelle les motifs sont insérés dépend essentiellement de la nature du matériau constituant'les motifs.

Avantageusement cette résine a une dureté proche de celle des motifs. Il s'agit en général d'une résine polyuréthane bi-composant, époxy ou méthacrylate.

La résine peut être translucide ou opaque et incolore ou colorée. Elle peut en outre contenir une charge de poudre ou de granulés qui est compatible avec la résine. La charge peut être constituée, par exemple, de poudre ou de granulés de caoutchouc.

Lorsqu'il est destiné à constituer un revêtement de finition décoratif, le revêtement de sol selon l'invention comprend de préférence, en surface, un vernis compatible avec le matériau des motifs et de la résine, additionné avantageusement d'au moins un agent de matage et/ou d'au moins un filtre anti-UV.

Le vernis peut être constitué par exemple de polyuréthane bi-composant à base d'un composant polyhydroxylé et d'un polyisocyanate, de préférence aliphatique.

L'invention a également pour objet un procédé de réalisation du revêtement de sol défini ci-dessus, caractérisé en ce qu'il comprend les étapes consistant à :
a) appliquer une couche d'accrochage sur le sol à revêtir, sur une largeur permettant la mise en place progressive des motifs choisis ;
b) avant le séchage de la couche d'accrochage, disposer sur celle-ci une partie des motifs, suivant le schéma choisi ;
c) répéter les étapes a) et b) jusqu'au recouvrement total de la surface à revêtir ;
d) laisser sécher ;
e) remplir les espaces entre les motifs avec la résine souple choisie, utilisée en tant que mastic ;
f) laisser sécher ; et
g) poncer, si nécessaire, pour compenser les défauts de planimétrie et faire réapparaître les motifs.

Si le support présente un aspect poreux, le procédé selon l'invention comporte les étapes supplémentaires, préliminaires, consistant à :
α) imprégner le support avec un prépolymère de type isocyanate solvaté dont le durcissement s'effectue par réaction des groupements isocyanate libre avec l'humidité de l'air ;
β) laisser sécher ;
γ) procéder à un ragréage au moyen d'une résine ; et
δ) laisser sécher pendant une durée adaptée au collage ultérieur de la couche d'accrochage.

Le solvant utilisé pour le prépolymère de type isocyanate est, par exemple, le 1-méthoxy-2-acétoxypropane (PMA).

La résine de ragréage est de préférence à base de polyuréthane bi-composant, obtenue par polyaddition d'une résine polyhydroxylée chargée et d'un polyisocyanate de type MDI.

Lorsque l'on réalise un revêtement de finition décoratif, le procédé selon l'invention comporte de préférence les étapes finales consistant à :
α') aspirer les poussières dues au ponçage ;
β') effectuer, si nécessaire, un masticage supplémentaire avec la résine utilisée à l'étape e) mais solvatée, pour boucher les quelques trous d'air éventuellement présents ;
γ') laisser sécher ;
δ') effectuer un lustrage ; et
ε') appliquer un vernis compatible avec le matériau des motifs et de la résine, additionné avantageusement d'au moins un agent de matage et/ou d'au moins un filtre anti-UV.

Comme indiqué ci-dessus, le vernis peut être constitué par exemple de polyuréthane bi-composant à base d'un composant polyhydroxylé et d'un polyisocyanate, de préférence aliphatique.

Lorsque le revêtement selon l'invention est un revêtement de base, après séchage on le munit d'un revêtement de finition, de préférence un revêtement de sol coulé à base de résine et de granulés de caoutchouc, selon une technique bien connue de l'art antérieur.

L'invention sera expliquée plus en détail dans les exemples illustratifs qui suivent.

### EXEMPLE 1 :

### Réalisation d'un revêtement de sol de finition décoratif avec des motifs en caoutchouc.

Dans le cas où le support présente un aspect poreux, on procède avant tout ragréage à une imprégnation à base d'un prépolymère de type polyisocyanate solvaté (par exemple avec du PMA) dont le durcissement s'effectue par réaction des groupements isocyanate libre avec l'humidité de l'air.

L'application de l'imprégnation se fait au rouleau de laine moyenne ou longue. Le séchage de cette imprégnation est de 12 à 24 h, suivant la température et l'hygrométrie.

Afin de limiter le temps de séchage, on choisit un ragréage de préférence à base de résine polyuréthane bi-composant en réalisant une polyaddition entre une résine polyhydroxylée chargée et un polyisocyanate de type MDI. On peut également ajouter de la poudre de caoutchouc obtenue avantageusement lors du ponçage d'un revêtement final, pour réduire les coûts du ragréage.

L'application du ragréage se fait au peigne de 2 à 3 mm, suivant l'état de planimétrie du support et la finition au rouleau à picots peut permettre de terminer l'égalisation dans le cas d'un ragréage très chargé en poudre de caoutchouc.

Le séchage du ragréage dépend de la température et varie de 12 à 24 h. Si ce temps est dépassé, il faut effectuer une opération de ponçage pour assurer le collage avec la couche d'accrochage.

La couche d'accrochage est réalisée à partir d'une résine bi-composant comprenant une résine polyhydoxylée chargée et un polyisocyanate de type MDI.

L'application se fait au peigne de 2 à 3 mm sur une largeur de 50 cm pour permettre la mise en place des motifs au fur et à mesure de l'avancement.

Les motifs en caoutchouc sont ensuite disposés suivant la décoration souhaitée qui peut varier aussi bien dans les formes et les couleurs que dans l'espacement entre les motifs.

Une fois les motifs mis en place et après un délai de séchage de 12 à 24 h suivant la température, on remplit les espaces entre les motifs de résine polyuréthane bi-composant avec ou sans poudre de caoutchouc ou granulés de caoutchouc.

La partie hydroxylée de la résine est colorée suivant le choix retenu et réagit avec le polyisocyanate de type MDI pour donner un mastic polyuréthane de préférence de dureté proche de celle des motifs en caoutchouc. Cette caractéristique est obtenue grâce à un choix approprié de la résine hydroxylée.

L'application de ce mastic se fait à la taloche ou au grattoir, en poussant le produit entre les motifs et en raclant au maximum le produit sur les motifs pour limiter le ponçage.

Une fois le masticage terminé, on attend 12 à 24 h pour effectuer un ponçage au grain 36 à l'aide d'une ponceuse à bande ou à rouleau. Le ponçage est croisé pour permettre de compenser les défauts de planimétrie. On effectue un autre ponçage au grain 80, puis au grain 120.

Après aspiration de toutes les poussières dues au ponçage, on effectue suivant les besoins, un masticage avec une résine ayant la même composition que celle précédemment utilisée, mais solvatée par exemple au PMA (1-méthoxy-2-acétoxypropane) pour boucher les quelques trous d'air encore présents.

Après séchage du mastic (quelques heures seulement si on accélère la polyaddition par ajout de didodécanoate de dibutyl-étain), on effectue un lustrage avec une ponceuse rotative munie d'un disque abrasif, au grain 120.

Après aspiration des poussières dues au lustrage, on applique au rouleau à poils mi-courts un vernis polyuréthane bi-composant à base d'un composant polyhydoxylé avec des agents de matage, des filtres anti-UV et un polyisocyanate, de préférence aliphatique, pour éviter le jaunissement.

Les motifs en caoutchouc peuvent être remplacés ou mélangés avec des motifs en bois, en plastique etc...

Le mastic de type polyuréthane peut être remplacé par une résine époxy ou méthacrylate, par exemple.

### EXEMPLE 2 :

### Réalisation d'un revêtement de sol de base dans une voiture de métro.

Une fois le contre-plaqué marine enlevé, excepté les quelques parties dégradées par l'eau (5 % au maximum de la surface totale), on procède au tronçonnage du bois pour réaliser des pièces de 0,5 à 2 m².

Sur le support en aluminium ou en acier réparé si nécessaire, poncé et nettoyé, on applique un primaire de polyuréthane solvaté : prépolymère ayant des groupements isocyanate libre qui réagissent avec l'humidité de l'air et le solvant de type PMA.

Après séchage pendant 12 à 24 h suivant la température, on applique la couche d'accrochage à partir d'une résine bi-composant comprenant une résine polyhydroxylée chargée et un polyisocyanate de type MDI.

L'application se fait au peigne de 2 à 3 mm, sur une largeur de 50 à 80 cm pour permettre la mise en place des morceaux de bois récupérés, au fur et à mesure de l'avancement.

Après un séchage de 12 à 24 h suivant la température, on remplit les espaces entre les morceaux de bois de résine polyuréthane bi-composant, avec ou sans poudre de caoutchouc ou granulés de caoutchouc.

L'application de ce mastic se fait à la taloche ou au grattoir. On pousse le produit entre les morceaux de bois et on racle au maximum le produit sur ces derniers.

Après un séchage de 12 à 24 h, on réalise un revêtement de sol coulé à base de résine et de granulés de caoutchouc.

On a ainsi mis en oeuvre un procédé de fabrication d'un sol de type coulé avec une sous-couche étanche réalisée à partir de pièces de bois récupérées et donc d'un coût réduit.

## Revendications

1. Revêtement de sol formé in situ, sans joints, comprenant une couche de résine souple dans laquelle sont répartis des motifs, les espaces entre lesdits motifs étant remplis de ladite résine souple, caractérisé en ce que les motifs sont fixés au sol par l'intermédiaire d'une couche d'accrochage distincte de la couche de résine souple dans laquelle sont répartis lesdits motifs.

2. Revêtement de sol selon la revendication 1, caractérisé en ce qu'il est un revêtement de finition décoratif, laissant apparaître les motifs qu'il comporte.

3. Revêtement selon la revendication 1 ou 2, caractérisé en ce que la couche d'accrochage est constituée d'une résine bi-composant polyhydroxylée chargée et d'un polyisocyanate de type MDI, d'un polyuréthane mono-composant, d'un époxy ou d'un méthacrylate.

4. Revêtement selon l'une quelconque des revendications 1 à 3, caractérisé en ce que les motifs sont constitués de caoutchouc, de matière plastique, de résine époxy, de polyméthacrylate et/ou de bois.

5. Revêtement selon l'une quelconque des revendications 1 à 4, caractérisé en ce que la résine souple est une résine polyuréthane bi-composant, époxy ou méthacrylate.

6. Revêtement selon l'une quelconque des revendications 1 à 5, caractérisé en ce que la résine contient une charge de poudre ou de granulés, notamment de caoutchouc.

7. Revêtement selon l'une quelconque des revendications 2 à 6, caractérisé en ce qu'il comprend, en surface, un vernis compatible avec le matériau des motifs et de la résine, additionné avantageusement d'au moins un agent de matage et/ou d'au moins un filtre anti-UV.

8. Revêtement selon la revendication 7, caractérisé en ce que le vernis est constitué de polyuréthane bi-composant à base d'un composant polyhydroxylé et d'un polyisocyanate, de préférence aliphatique.

9. Procédé de réalisation du revêtement de sol selon l'une quelconque des revendications 1 à 8, caractérisé en ce qu'il comprend les étapes consistant à :
a) appliquer une couche d'accrochage sur le sol à revêtir, sur une largeur permettant la mise en place progressive des motifs choisis ;
b) avant le séchage de la couche d'accrochage, disposer sur celle-ci une partie des motifs, suivant le schéma choisi ;
c) répéter les étapes a) et b) jusqu'au recouvrement total de la surface à revêtir ;
d) laisser sécher ;
e) remplir les espaces entre les motifs avec la résine souple choisie, utilisée en tant que mastic ;
f) laisser sécher ; et
g) poncer, si nécessaire, pour compenser les défauts de planimétrie et faire réapparaître les motifs.

10. Procédé selon la revendication 9, caractérisé en ce que, lorsque le support est poreux, il comporte les étapes supplémentaires, préliminaires, consistant à :
α) imprégner le support avec un prépolymère de type isocyanate solvaté dont le durcissement s'effectue par réaction des groupements isocyanate libre avec l'humidité de l'air ;
β) laisser sécher ;
γ) procéder à un ragréage au moyen d'une résine ; et
δ) laisser sécher pendant une durée adaptée au collage ultérieur de la couche d'accrochage.

11. Procédé selon la revendication 9 ou 10, pour la réalisation du revêtement de finition selon la revendication 7 ou 8, caractérisé en ce qu'il comporte les étapes finales consistant à :
α') aspirer les poussières dues au ponçage ;
β') effectuer, si nécessaire, un masticage supplémentaire avec la résine utilisée à l'étape e) mais solvatée, pour boucher les quelques trous d'air éventuellement présents ;
γ') laisser sécher ;
δ') effectuer un lustrage ; et
ε') appliquer un vernis compatible avec le matériau des motifs et de la résine, additionné avantageusement d'au moins un agent de matage et/ou d'au moins un filtre anti-UV.

## Patentansprüche

1. Nahtloser, in situ gebildeter Bodenbelag, der eine weiche Harzschicht umfaßt, in der Motive verteilt sind, wobei der Raum zwischen den Motiven mit dem weichen Harz gefüllt ist, dadurch gekennzeichnet, daß die Motive am Boden durch eine Befestigungsschicht fixiert sind, die von der weichen Harzschicht, in welcher die Motive verteilt sind, verschieden ist.

2. Bodenbelag nach Anspruch 1, dadurch gekennzeichnet, daß er ein dekorativer Fertigbodenbelag ist, dessen Motive in Erscheinung treten.

3. Belag nach Anspruch 1 oder 2, dadurch gekennzeichnet, daß die Befestigungsschicht aus einem geladenen polyhydroxylierten Zweikomponentenharz und aus einem Polyisocyanat vom MDI-Typ, aus einem Einkomponenten-Polyurethan, aus einem Epoxid- oder aus einem Methacrylatharz gebildet ist.

4. Belag nach einem der Ansprüche 1 bis 3, dadurch gekennzeichnet, daß die Motive aus Kautschuk, Kunststoff, Epoxidharz, Polymethacrylat und/oder Holz gebildet sind.

5. Belag nach einem der Ansprüche 1 bis 4, dadurch gekennzeichnet, daß das weiche Harz ein Zweikomponenten-Polyurethan-, ein Epoxid- oder ein Methacrylatharz ist.

6. Belag nach einem der Ansprüche 1 bis 5, dadurch gekennzeichnet, daß das Harz einen Zusatz in Form von Pulver oder Körnern, insbesondere Kautschukkörnern, enthält.

7. Belag nach einem der Ansprüche 2 bis 6, dadurch gekennzeichnet, daß er an der Oberfläche einen mit dem Material der Motive und des Harzes kompatiblen Firnis aufweist, wobei vorteilhafterweise mindestens ein Mattierungsmittel und/oder mindestens ein UV-Filter zugegeben wird.

8. Belag nach Anspruch 7, dadurch gekennzeichnet, daß der Firnis aus einem Zweikomponenten-Polyurethan auf Basis einer polyhydroxylierten Komponente und eines vorzugsweise aliphatischen Polyisocyanates besteht.

9. Verfahren zur Herstellung des Bodenbelags nach einem der Ansprüche 1 bis 8, dadurch gekennzeichnet, daß es die folgenden Schritte umfaßt:
a) Auftragen einer Befestigungsschicht auf den zu belegenden Boden in einer Breite, die es ermöglicht, die gewählten Motive schrittweise einzusetzen;
b) Anordnen eines Teils der Motive nach dem gewählten Schema auf der Befestigungsschicht, bevor diese trocknet;
c) Wiederholen der Schritte a) und b), bis die zu belegende Fläche völlig bedeckt ist;
d) Trocknen lassen;
e) Füllen des Raums zwischen den Motiven mit dem gewählten weichen Harz, das wie ein Bindemittel verwendet wird;
f) Trocknen lassen; und
g) gegebenenfalls Schleifen zur Ausgleichung der Planimetriefehler, bis die Motive wieder in Erscheinung treten.

10. Verfahren nach Anspruch 9, dadurch gekennzeichnet, daß wenn der Träger porös ist, es die folgenden zusätzlichen vorhergehenden Schritte umfaßt:
α) Imprägnieren des Trägers mit einem Prepolymer in Form eines solvatisierten Isocyanats, dessen Härten durch Reaktion der freien Isocyanatgruppen mit Luftfeuchtigkeit erfolgt;
β) Trocknen lassen;
γ) Verputzen mittels eines Harzes; und
δ) Trocknen lassen während einer dem nachträglichen Verleimen der Befestigungsschicht angepaßten Dauer.

11. Verfahren nach Anspruch 9 oder 10 zur Herstellung des Fertigbelags nach Anspruch 7 oder 8, dadurch gekennzeichnet, daß es die folgenden abschließenden Schritte umfaßt:
α') Absaugen des durch das Schleifen entstandenen Staubs;
β') gegebenenfalls Durchführen einer zusätzlichen Mastikation mittels des bei Schritt e) verwendeten, jedoch solvatisierten Harzes, um einige eventuell vorhandene Luftlöcher zu verschließen;
γ') Trocknen lassen;
δ') Lüstrieren; und
ε') Auftragen eines Firnisses, der mit dem Material der Motive und des Harzes kompatibel ist, wobei vorteilhafterweise mindestens ein Mattierungsmittel und/oder mindestens ein UV-Filter zugegeben wird.

## Claims

1. Floor covering formed *in situ,* without joins, comprising a layer of flexible resin in which there are distributed motifs, the spaces between said motifs being filled with said flexible resin, characterised in that the motifs are fixed to the floor by a bonding layer distinct from the flexible resin layer in which said motifs are distributed.

2. Floor covering according to claim 1, characterised in that it is a decorative top covering that reveals the motifs that it comprises.

3. Covering according to claim 1 or claim 2, characterised in that the bonding layer is composed of a two-component polyhydroxylated resin comprising added material and of an MDI-type polyisocyanate, a single-component polyurethane , an epoxy or a methacrylate.

4. Covering according to any one of claims 1 to 3, characterised in that the motifs are composed of rubber, plastics material, epoxy resin, polymethacrylate and/or wood.

5. Covering according to any one of claims 1 to 4, characterised in that the flexible resin is a two-component polyurethane resin, an epoxy resin or a methacrylate resin.

6. Covering according to any one of claims 1 to 5, characterised in that the resin comprises added material in the form of a powder or granules, especially of rubber.

7. Covering according to any one of claims 2 to 6, characterised in that it has on its surface varnish compatible with the material of the motifs and of the resin, to which varnish there has advantageously been added at least one matting agent and/or at least one anti-UV filter.

8. Covering according to claim 7, characterised in that the varnish is composed of a two-component polyurethane based on a polyhydroxylated component and a polyisocyanate, which is preferably aliphatic.

9. Method for producing a floor covering according to any one of claims 1 to 8, characterised in that it comprises the steps of:
a) applying a bonding layer to the floor to be covered over a width that enables the gradual laying of the selected motifs;
b) before drying of the bonding layer, positioning thereon some of the motifs according to the selected scheme;
c) repeating steps a) and b) until the surface to be covered has been covered completely;
d) allowing to dry;
e) filling the spaces between the motifs with the selected flexible resin, used as a filler;
f) allowing to dry; and
g) sanding, if necessary, to compensate for faults in planarity and to reveal the motifs.

10. Method according to claim 9, characterised in that, if the support is porous, it includes the additional preliminary steps of:
α) impregnating the support with a prepolymer of an isocyanate type in association with a solvent, the hardening of which prepolymer is effected by reaction of the free isocyanate groups with atmospheric moisture;
β) allowing to dry;
γ) providing a finish by means of a resin; and
δ) allowing to dry for a period suited to the subsequent adhesion of the bonding layer.

11. Method according to claim 9 or 10 for producing a top covering according to claim 7 or 8, characterised in that it includes the final steps of:
α') aspirating the dust resulting from sanding;
β') carrying out, if necessary, an additional application of the resin used in step e) but in association with a solvent, to close off any air holes that may be present;
γ') allowing to dry;
δ') polishing; and
ε') applying a varnish compatible with the material of the motifs and of the resin, to which varnish there has advantageously been added at least one matting agent and/or at least one anti-UV filter.
